# EUROPÄISCHE PATENTSCHRIFT

(11) **EP 3 176 491 B1**
(45) Veröffentlichungstag und Bekanntmachung des Hinweises auf die Patenterteilung: **02.12.2020**
(21) Anmeldenummer: 16002188.7
(22) Anmeldetag: 11.10.2016
(51) Int. Cl.: F17C 5/00

(54) **ABGASSYSTEM FÜR MOBILE WASSERSTOFFTRANSPORTSYSTEME**
EXHAUST SYSTEM FOR MOBILE HYDROGEN TRANSPORT SYSTEMS
SYSTÈME DE GAZ D'ÉCHAPPEMENT POUR SYSTÈMES MOBILES DE TRANSPORT D'HYDROGÈNE

(30) Priorität: 01.12.2015 DE 102015015529
(43) Veröffentlichungstag der Anmeldung: 07.06.2017
(73) Patentinhaber: Linde GmbH, 82049 Pullach (DE)
(72) Erfinder: Reese, Wilfried-Henning, 85716 Unterschleißheim (DE); Kederer, Tobias, 82544 Egling-Aufhofen (DE); Brücklmeier, Martin, 82057 Icking (DE); Szardenings, Roland, 82515 Wolfratshausen (DE); Schäfer, Simon, 82049 Pullach (DE)
(74) Vertreter: Gellner, Bernd

(56) Entgegenhaltungen:
- DE-U1- 29 506 246
- GB-A- 2 238 732
- US-A1- 2010 115 896
- US-A1- 2013 061 983

## Beschreibung

Die Erfindung betrifft ein Verfahren zur Ableitung von Abgasen an einer mobilen Anlage, zur Befüllung von Speicherbehältern mit Wasserstoff, sowie ein Abgassystem, welches zur Ableitung von Abgasen aus einer mobilen Anlage zur Befüllung von Speicherbehältern mit Wasserstoff eingerichtet ist.

Wasserstofftankstellen, zur Befüllung von kleineren Speichertanks, insbesondere von Speichertanks in PKWs und Bussen, sind bisher kaum verbreitet. Wasserstoff der in Brennstoffzellen verbrannt wird, gilt jedoch als Kraftstoff der Zukunft. Immer mehr Autohersteller haben serienreife Wasserstofffahrzeuge im Angebot. Eine breite Markteinführung scheitert jedoch bisher auch an der geringen Verbreitung von Wasserstofftankstellen. Wasserstofftankstellen können bisher kaum wirtschaftlich betrieben werden, da es zu wenige Fahrzeuge gibt, die diesen Kraftstoff benötigen. Es ist deshalb notwendig, während der Markteinführung der wasserstoffbetriebenen Fahrzeuge Wasserstofftankstellen möglichst kostengünstig zu gestalten. Eine Möglichkeit sind hierfür mobile Tankstellen, die auf einem Lastwagen installiert sind. Eine weitere Variante sind festinstallierte Tankstellen bei denen jedoch nur die notwendigste Infrastruktur vorhanden ist. Nicht für den normalen Betankungsprozess notwendige Bestandteile, die mobil auf einem Lastwagen installiert sind könnten sich mehrere Tankstellen teilen.

Bei der Befüllung von Speichertanks, insbesondere von fest installierten Speichertanks an Tankstellen oder von Speichertanks in mobilen Fahrzeugen fällt Abgas an. Auffangsysteme für dieses Abgas sind möglich, jedoch kostenintensiv. So ist es gerade für kleine Wasserstofftankstellen rentabler das Abgas in die Atmosphäre abzugeben, als Infrastruktur zur Aufarbeitung bereit zu stellen. Für Wasserstoff sind jedoch bei der Einleitung in die Atmosphäre besondere Vorkehrungen zu treffen. So muss das Gas insbesondere in einer bestimmten Höhe freigesetzt werden. Die notwendige Höhe ist abhängig von der Umgebung und den umgebenden Bedingungen, wie beispielsweise der Wetterlage. Die Ableitung in einer bestimmten Höhe ist bisher mit technischem und logistischem Aufwand verbunden, da mit Hilfe von Kränen oder mit Gerüsten, was Arbeiten in großer Höhe mit sich führt, ein Kamin installiert werden muss, über den das Abgas freigesetzt werden kann.

Aufgabe der vorliegenden Erfindung ist es deshalb ein Verfahren und eine Vorrichtung anzugeben, bei dem das Abgas sicher und ohne großen Installationsaufwand in mindestens der gesetzlich vorgegebenen Höhe abgeleitet werden kann.

Verfahrensseitig wird die Aufgabe dadurch gelöst, dass die Ableitung der Abgase in einer Höhe von 1 bis 12 m über einen an der mobilen Anlage beweglich angebrachten Kamin erfolgt und dass der Kamin über ein Drehgelenk so bewegt wird, dass er während eines Transports horizontal ist und während des Betriebes der mobilen Anlage vertikal. Vorrichtungsseitig wird die Aufgabe dadurch gelöst, dass das Abgassystem mindestens einen Kamin umfasst, an einer mobilen Anlage angebracht ist und ein Drehgelenk, mit welchem der Kamin horizontal oder vertikal installierbar ist.

Unter horizontal oder vertikal ist jeweils auch eine Abweichung von der horizontalen Lage um bis zu + oder - 45 Grad, insbesondere um + oder - 5 bis 20 Grad zu verstehen.

Bevorzugt wird der bewegliche Kamin direkt an der mobilen Anlage installiert. Die mobile Anlage kann entweder selbst als Tankstelle fungieren oder sie befüllt die Speicherbehälter einer festinstallierten Tankstelle. Als mobile Anlage wird insbesondere ein Lastwagen, welcher einen Speichertank zum Transport von Wasserstoff umfasst, verstanden.

Als Abgas wird hier vor allem Wasserstoffgas bezeichnet, welches nicht im richtigen Temperatur oder Druckbereich vorliegt um für die Betankung oder Befüllung verwendet zu werden. Dies entsteht insbesondere durch Reste von Wasserstoff in den Leitungen oder durch Abdampfverluste, sogenanntes Boil-off gas, in den Speicherbehältern. Auch aus Sicherheitseinrichtungen wie Sicherheitsventilen, Überstömventilen oder der Not-Schnellentspannung des Leitungssystems kann Abgas anfallen. Abgas kann deshalb sowohl in der mobilen Anlage entstehen, im Speicherbehälter der Tankstelle oder dem anliefernden Lastwagen oder aber auch in den zu befüllenden Speicherbehältern. Bevorzugt sind deshalb Mittel vorgesehen das gesamte anfallende Abgas, also Wasserstoffabgas, über das Abgassystem mit dem Kamin abzuleiten.

Das Abgassystem umfasst neben dem Kamin und dessen Befestigungsvorrichtungen auch die entsprechenden Leitungen oder Verbindungsstutzen zum Anschluss von Leitungen um das Wasserstoffabgas abführen zu können. Der Kamin selbst besteht aus einem oder aus mehreren Rohren in denen das Wasserstoffgas geführt wird und aus einem stabilisierendem Gerüst für das Rohr. Der Gasauslass der Rohre, also die Ausgangsöffnung, ist vorteilhafterweise so geformt, dass möglichst keine Verunreinigungen von außen, insbesondere Regenwasser, eindringen können und dass das Abgas leise und gleichmäßig abgeführt werden kann. So kann das Rohr am oder in der Nähe des Gasauslasses Rückschlagklappen enthalten.
In einer bevorzugten Ausgestaltung ist das Rohr aus Edelstahl gefertigt und hat einen Innendurchmesser von 40 bis 50 mm sowie ein Länge von 6 m.

Die Anschlüsse der Abgasleitung sind vorteilhafterweise möglichst nahe am Drehpunkt des Kamins angebracht. Bevorzugt ist der Kamin mit flexiblen Schläuchen verbunden, so dass die Bewegung des Kamins aufgenommen werden kann.

Vorteilhafterweise wird der Kamin, während des Transports der mobilen Anlage, so montiert, dass der Kamin die Höhe der mobilen Anlage um maximal 1 bis 50 cm, insbesondere maximal 5 bis 20 cm überschreitet. In horizontaler Lage überragt das Abgassystem also die mobile Anlage um maximal 1 bis 50 cm, insbesondere maximal 5 bis 20 cm. Bevorzugt ist das Abgassystem jedoch so angebracht, dass die Gesamthöhe der mobilen Anlage dadurch nicht erhöht wird. Ist das Abgassystem beispielsweise an einem Lastwagen montiert, der einen Tank zum Transport von Wasserstoff besitzt, um fest installierte Speicherbehälter mit Wasserstoff zu beliefern, soll die Gesamthöhe und die Gesamtlänge des Lastwagens, also insbesondere des Anhängers des Lastwagens, nicht verändert werden.

Während des Betriebes der mobilen Anlage wird der Kamin vorteilhafterweise auf eine Höhe von 1 bis 12 m, insbesondere von 2 bis 5 m und bevorzugt um 6 m ausgefahren. In vertikaler Lage überragt das Abgassystem also die mobile Anlage um 1 bis 12 m, insbesondere um 2 bis 5 m und bevorzugt um 6 m.

Bevorzugterweise kann der Kamin über ein Drehgelenk so bewegt werden, dass er während des Transports horizontal ist und während des Betriebes vertikal. Zudem ist es vorteilhaft, wenn das Kaminrohr über ein Teleskopsystem verfügt, also verlängerbar ist, so dass er einfach und flexibel an die benötigte Höhe angepasst werden kann. Als Grundläge kann beispielsweise die Länge der mobilen Anlage, insbesondere eines Lastwagen Anhängers gewählt werden.
Vorteilhafterweise verfügt der Kamin über eine Gegenmasse auf der einer Ausgangsöffnung des Kamins gegenüberliegenden Seite.
Durch diese Gegenmasse oder Gegengewicht ist es für einen Bediener einfach möglich den Kamin aufzustellen oder einzuklappen. Das Drehgelenk selbst kann so ausgeführt sein, dass es in einer Position fixiert werden kann um die Lage des Kamins zu sichern. Zusätzlich können jedoch noch weitere Befestigungsvorrichtungen, wie Bolzen oder Klinken, vorgesehen sein. So kann insbesondere ein Befestigungsmechanismus vorgesehen sein um die Spitze des Kamins während des Transports bzw. in horizontaler Lage an der mobilen Anlage zu fixieren. Ebenso kann ein weiterer Befestigungsmechanismus vorgesehen sein um den Kamin in vertikaler Lage zu fixieren.

In einer weiteren Ausgestaltungsvariante kann es hingegen vorteilhaft sein, wenn eine Feder vorgesehen ist um den Kamin zu fixieren.
So kann an Stelle einer Gegenmasse, oder zur Unterstützung dieser, eine Feder vorgesehen sein um den Kamin in horizontaler oder vertikaler Lage zu fixieren. Die Federkraft erzeugt so die notwendige Kraft um den Kamin in Transport- oder Betriebsstellung zu befestigen. Die Federkraft kann auch unterstützend beim Aufrichten oder Einfahren des Kamins wirken.

Zusätzlich zu diesen an der mobilen Anlage angebrachten Befestigungsvorrichtungen sind im Normalbetrieb keine weiteren Fixierungen vorgesehen. Es kann jedoch notwendig sein, insbesondere bei starken Winden, dass eine zusätzliche Fixierung des Kamins in vertikaler Position, insbesondere durch Seile notwendig ist.

Wird in einem besonderen Ausführungsfall der Kamin nur für die Ableitung des Abgases aus einem Speichertank verwendet, kann die Zuführung des Abgases zum Kamin über flexible Schläuche dauerhaft installiert sein. So entfallen Verschraubungsarbeiten und Dichtheitsprüfungen vor der Inbetriebnahme. Der Zeitaufwand kann dadurch reduziert werden.

Der beschriebene Kamin bietet Vorteile insbesondere bei der Befüllung von Speichertanks mit Wasserstoff. Er kann jedoch ebenso bei anderen Abgasen, insbesondere bei Abgasen von Erdgas verwendet werden. Insbesondere bei der Befüllung von Speichertanks mit flüssigem Erdgas oder Autogas fallen ebenfalls Boil-off Gase an, die an die Umgebung abgeleitet werden müssen.

Bei der Verwendung eines erfindungsgemäßen Abgassystems entfallen Arbeiten in großen Höhen, somit auch die Bereitstellung der entsprechenden Arbeitsmittel und die Gewährung der Arbeitssicherheit. Für den Bediener der Anlage ist in der Regel keine Notwendigkeit für die aktive Verschraubung von Leitungen notwendig. Die Bedingung des Kamins kann von einer Person alleine ausgeführt werden.

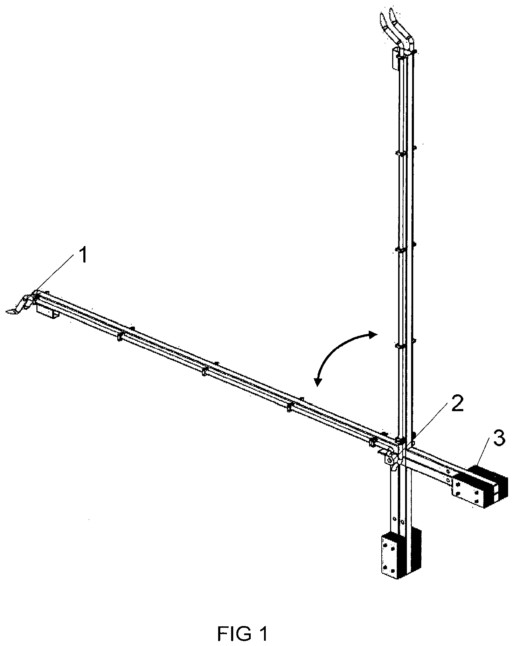

Im Folgenden soll die Erfindung anhand eines in der Figur 1 schematisch dargestellten Ausführungsbeispiels näher erläutert werden.

Die Figur 1 zeigt einen Kamin der über zwei Abgasrohre 1 verfügt, sowie ein Drehgelenk 2 und ein Gewicht 3.
Der Kamin ist über das Drehgelenk an einem Lastwagen befestigt. Während des Transportes oder wenn das Abgassystem nicht in Betrieb ist befindet sich der Kamin in horizontaler Lage. Die Spitze des Kamins, also am Ausgang der Abgasrohre, kann zusätzlich am Lastwagen befestigt sein. Die Abgasrohre werden durch eine Gerüstkonstruktion, stabilisiert.
In Transportposition überragt das Abgassystem den Lastwagen nicht oder kaum, so kann das Abgassystem insbesondere seitlich an einem Speichertank befestigt werden. Das Drehgelenk kann im 90° Winkel bewegt werden, so dass der Kamin aufgestellt werden kann. Das Gewicht 3 dient hierzu als Gegengewicht. Es erleichtert das Aufrichten des Kamins und hält diesen in Position.
Wird das Abgassystem benötigt, wird der Kamin aufgerichtet. Im dargestellten Beispiel überragt der Kamin den Lastwagen damit um mindestens 4 m.
Das dargestellte Beispiel verfügt nicht über ein Teleskopsystem so dass hier die Länge des Kamins nicht variiert werden kann. In anderen Ausführungsformen ist dies jedoch vorstellbar.

## Patentansprüche

1. Verfahren zur Ableitung von Abgasen an einer mobilen Anlage zur Befüllung von Speicherbehältern mit Wasserstoff, **dadurch gekennzeichnet, dass** die Ableitung der Abgase in einer Höhe von 1 bis 12 m über einen an der mobilen Anlage beweglich angebrachten Kamin erfolgt und dass der Kamin über ein Drehgelenk (2) so bewegt wird, dass er während eines Transports horizontal ist und während des Betriebes der mobilen Anlage vertikal.

2. Verfahren nach Anspruch 1, **dadurch gekennzeichnet, dass** der Kamin während des Transports der mobilen Anlage so montiert wird, dass der Kamin die Höhe der mobilen Anlage um maximal 1 bis 50 cm, insbesondere maximal 5 bis 20 cm überschreitet.

3. Verfahren nach Anspruch 1, **dadurch gekennzeichnet, dass** der Kamin während des Betriebes der mobilen Anlage auf eine Höhe von 1 bis 12 m, insbesondere von 2 bis 5 m ausgefahren wird.

4. Abgassystem zur Ableitung von Abgasen aus einer mobilen Anlage zur Befüllung von Speicherbehältern mit Wasserstoff, **dadurch gekennzeichnet, dass** das Abgassystem mindestens einen beweglich an der mobilen Anlage anbringbaren Kamin umfasst, der über ein Drehgelenk (2) horizontal oder vertikal installierbar ist.

5. Abgassystem nach Anspruch 5, **dadurch gekennzeichnet, dass** der Kamin über eine Gegenmasse (3) auf der einer Ausgangsöffnung des Kamins gegenüberliegenden Seite verfügt.

6. Abgassystem nach Anspruch 5, **dadurch gekennzeichnet, dass** eine Feder vorgesehen ist, um den Kamin zu fixieren.

7. Abgassystem nach mindestens einem der Ansprüche 5 bis 7, **dadurch gekennzeichnet, dass** das Abgassystem in horizontaler Lage die mobile Anlage um maximal 1 bis 50 cm, insbesondere maximal 5 bis 20 cm überragt.

8. Abgassystem nach mindestens einem der Ansprüche 5 bis 8, **dadurch gekennzeichnet, dass** das Abgassystem in vertikaler Lage die mobile Anlage um 1 bis 12 m, insbesondere um 2 bis 5 m überragt.

## Claims

1. Method for discharging exhaust gases at a mobile system for filling storage containers with hydrogen, **characterized in that** the exhaust gases are discharged at a height of 1 to 12 m via a chimney movably attached to the mobile system, and **that** the chimney is moved by means of a swivel joint (2) in such a way that it is horizontal during transport and vertical during operation of the mobile system.

2. Method according to Claim 1, **characterized in that**, during transport of the mobile system, the chimney is mounted in such a way that the chimney exceeds the height of the mobile system by at most 1 to 50 cm, in particular at most 5 to 20 cm.

3. Method according to Claim 1, **characterized in that**, during operation of the mobile system, the chimney is extended to a height of 1 to 12 m, in particular of 2 to 5 m.

4. Exhaust system for discharging exhaust gases from a mobile system for filling storage containers with hydrogen, **characterized in that** the exhaust system comprises at least one chimney which is movably attached to the mobile system and can be installed horizontally or vertically by means of a swivel joint (2).

5. Exhaust system according to Claim 4, **characterized in that** the chimney has a countermass (3) on the side opposite an outlet opening of the chimney.

6. Exhaust system according to one of Claims 4 or 5, **characterized in that** a spring is provided to fix the chimney.

7. Exhaust system according to one of Claims 4 through 6, **characterized in that**, in the horizontal position, the exhaust system projects beyond the mobile system by at most 1 to 50 cm, in particular at most 5 to 20 cm.

8. Exhaust system according to one of Claims 4 through 7, **characterized in that**, in the vertical position, the exhaust system projects beyond the mobile system by 1 to 12 m, in particular by 2 to 5 m.

## Revendications

1. Procédé pour l'évacuation de gaz d'échappement dans une installation mobile pour le remplissage de réservoirs de stockage avec de l'hydrogène, **caractérisé en ce que** l'évacuation des gaz d'échappement s'effectue à une hauteur de 1 à 12 m au-dessus d'une cheminée montée mobile sur l'installation mobile et **en ce que** la cheminée est déplacée au moyen d'un pivot (2) de façon à ce qu'elle soit horizontale durant un transport et verticale durant le fonctionnement de l'installation mobile.

2. Procédé selon la revendication 1, **caractérisé en ce que** la cheminée est montée de telle façon durant le transport de l'installation mobile que la cheminée dépasse la hauteur de l'installation mobile d'au maximum 1 à 50 cm, en particulier d'au maximum 5 à 20 cm.

3. Procédé selon la revendication 1, **caractérisé en ce que** la cheminée est déployée durant le fonctionnement de l'installation mobile à une hauteur de 1 à 12 m, en particulier de 2 à 5 m.

4. Système de gaz d'échappement pour l'évacuation de gaz d'échappement d'une installation mobile pour le remplissage de réservoirs de stockage avec de l'hydrogène, **caractérisé en ce que** le système de gaz d'échappement comprend au moins une cheminée qui et montée mobile sur l'installation mobile, laquelle peut être installée horizontalement ou verticalement au moyen d'un pivot (2).

5. Système de gaz d'échappement selon la revendication 4, **caractérisé en ce que** la cheminée dispose d'un contrepoids (3) sur le côté opposé à une ouverture de sortie de la cheminée.

6. Système de gaz d'échappement selon une des revendications 4 ou 5, **caractérisé en ce qu'**un ressort est prévu pour fixer la cheminée.

7. Système de gaz d'échappement selon une des revendications 4 à 6, **caractérisé en ce que** le système de gaz d'échappement dépasse, en position horizontale, l'installation mobile d'au maximum 1 à 50 cm, en particulier d'au maximum 5 à 20 cm.

8. Système de gaz d'échappement selon une des revendications 4 à 7, **caractérisé en ce que** le système de gaz d'échappement dépasse, en position verticale, l'installation mobile de 1 à 12 m, en particulier de 2 à 5 m.
